# EUROPÄISCHE PATENTSCHRIFT

(11) **EP 2 166 203 B1**
(45) Veröffentlichungstag und Bekanntmachung des Hinweises auf die Patenterteilung: **04.11.2015**
(21) Anmeldenummer: 09009538.1
(22) Anmeldetag: 23.07.2009
(51) Int. Cl.: F01N 3/022, F01N 3/023, F01N 3/035, F01N 3/24, F01N 3/28, F01N 3/20

(54) **Vorrichtung zur Reinigung eines Abgasstroms einer Brennkraftmaschine eines Kraftfahrzeuges, insbesondere eines Nutzfahrzeuges**
Device for cleaning an exhaust gas flow of a combustion engine of a motor vehicle, in particular a commercial vehicle
Dispositif de nettoyage d'un flux de gaz d'échappement d'un moteur à combustion interne d'un véhicule automobile, notamment un véhicule utilitaire

(30) Priorität: 23.09.2008 DE 102008048518
(43) Veröffentlichungstag der Anmeldung: 24.03.2010
(73) Patentinhaber: MAN Truck & Bus AG, 80995 München (DE)
(72) Erfinder: Döring, Andreas, 82008 München (DE)

(56) Entgegenhaltungen:
- EP-A- 0 020 766
- EP-A- 1 087 113
- EP-A- 1 878 885
- DE-A1-102006 003 253
- US-A1- 2006 179 825

## Beschreibung

Die Erfindung betrifft eine Vorrichtung zur Reinigung eines Abgasstroms einer Brennkraftmaschine eines Kraftfahrzeuges, insbesondere eines Nutzfahrzeuges, nach dem Oberbegriff des Anspruchs 1.

Um die zukünftig geltenden Abgasbestimmungen zu erfüllen, ist der gleichzeitige Einsatz von sowohl Anordnungen zur Reduzierung der Stickoxidemission als auch von Anordnungen zur Reduzierung der Feinstaubpartikelemission erforderlich. Hierzu sind bereits verschiedene Anordnungen und Verfahren bekannt geworden:

Aus der DE 103 48 799 A1 ist eine Anordnung bekannt, die aus einem Oxidationskatalysator, einem stromab zu diesem Oxidationskatalysator im Abgasstrom angeordneten SCR-Katalysator und einem stromab zum SCR-Katalysator im Abgasstrom angeordneten Partikelfilter besteht. Die Abkürzung SCR steht dabei für selektive katalytische Reduktion. Die Zuführung des Reduktionsmittels für die im SCR-Katalysator ablaufende selektive katalytische Reaktion erfolgt unmittelbar vor dem SCR-Katalysator über eine in Abhängigkeit von Betriebsparametern der Brennkraftmaschine gesteuerte Harnstoff-Zudosiervorrichtung. Nachteilig bei dieser Anordnung ist jedoch, dass das im Oxidationskatalysator erzeugte Stickstoffdioxid durch die selektive katalytische Reduktion im SCR-Katalysator im Wesentlichen vollständig verbraucht wird und damit für die Oxidation von, im nachgeordneten Partikelfilter angelagerten kohlenstoffhaltigen Rußpartikeln nicht zu Verfügung steht. Die Regeneration des Partikelfilters durch Oxidation der Russpartikel muss deshalb aufwendig durch zyklisches Aufheizen des Abgasstroms bewerkstelligt werden, indem der Abgasstrom mit Kohlenwasserstoffen angereichert und diese anschließend, meist katalytisch, oxidiert werden, was auf Grund der Exothermie der Reaktion zu einer Temperaturerhöhung des Abgasstroms führt. Die Zuführung des Abgasstroms geschieht entweder durch Anfetten des Verbrennungsgemisches oder Eindüsen von Kraftstoffen vor den Partikelfilter. Eine derartige Anordnung zum Regenerieren des Partikelfilters ist einerseits aufwendig und teuer, andererseits erzeugt die zyklische Regeneration des am Ende der Anordnung liegenden Partikelfilters erneut Schadstoffe, die nicht mehr aus dem Abgas entfernt werden können.

Eine weitere Kombination aus einem Partikelfilter und einer Anordnung zu selektiven katalytischen Reduktion ist aus der EP 1 054 722 A1 bekannt. Die dort beschriebene Anordnung besteht aus einem im Abgasstrom angeordneten Oxidationskatalysator, der den Anteil des Stickstoffdioxids im Abgas erhöht, einem stromab nachgeordneten Feinstofffilter, einem Reservoir für die Reduktionsmittelflüssigkeit sowie einer Einspritzvorrichtung für die Reduktionsflüssigkeit, die hinter dem Feinstofffilter angeordnet ist. Ferner ist ein im Abgasstrom stromab des Feinstofffilters angeordneter SCR-Katalysator vorgesehen. Ein gravierender Nachteil dieser Anordnung besteht darin, dass der Partikelfilter eine Abkühlung des Abgases bewirkt, sodass zum Beispiel bei Verwendung einer marktüblichen 33%igen wässrigen Harnstofflösung, Markenname AdBlue, als Reduktionsflüssigkeit die Abgastemperatur, insbesondere nach dem Start der Brennkraftmaschine bzw. beim Betreiben der Brennkraftmaschine im unteren Leistungsbereich zu niedrig ist, um ohne den Anfall problematischer Nebenprodukte aus der wässrigen Harnstofflösung Ammoniak zu erzeugen.

Eine weitere mögliche Kombination eines Partikelfilters und eines SCR-Katalysators ist in der US 2006/016 23 23 A1 beschrieben. Hierbei wird der Partikelfilter mit einer SCR-aktiven Beschichtung versehen, wobei der komplette Filter mit aktivem Material versehen wird. Der Nachteil dieses Verfahrens besteht darin, dass es, bei einem unkontrollierten Abbrennen des im Partikelfilter eingelagerten Kohlenstoffs gemäß der nachstehenden, stark exothermen Reaktion

C + O₂ -> CO₂

zu einer thermischen Schädigung der SCR-Katalysatoren kommen kann, da der abgeschiedene Kohlenstoff und der SCR-Katalysator in einem direkten Kontakt stehen.

Weiter ist aus der DE 102 57 113 A1 die Beschichtung eines offenen Partikelabscheiders bekannt, bei dem sich, analog zur US 2006/016 23 23 A1, das Problem der thermischen Schädigung des SCR-Katalysators bei einer unkontrollierten Oxidation des abgeschiedenen Kohlenstoffes ergibt, da auch hier der abgeschiedene Kohlenstoff und der SCR-Katalysator in einem direktem Kontakt stehen.

Aus der DE 103 35 785 A1 ist ein Partikelfilter bekannt, bei dem die Austrittsoberfläche mit einer SCR-aktiven Beschichtung und die Eintrittsoberfläche mit einem Katalysator zur Bildung von Ammoniak in fetten Betriebsphasen versehen ist. Beim letztgenannten Katalysator kann es sich um einen platinmetallhaltigen Drei-Wege-Katalysator oder um einen NOₓ-Speicherka-talysator handeln. Der Nachteil dieses Verfahrens besteht darin, dass nur in den fetten Betriebsphasen am SCR-Katalysator Ammoniak vorliegt, während bei der, speziell für Dieselmotoren üblichen mageren Betriebsweise, kein Ammoniak am SCR-Katalysator zur Verfügung steht und damit auch kein NOₓ-Umsatz generiert werden kann. Der Grund dafür besteht darin, dass in mageren Betriebsphasen das notwendige Ammoniak nicht stromauf des Partikelfilters zugegeben werden kann, da es an den platinmetallhaltigen Katalysatoren der Eintrittsoberfläche des Filters oxidiert werden würde. Das heißt, dass das benötigte Ammoniak durch zyklischen Wechsel zwischen fetten und mageren Betriebsphasen aus den Kohlenwasserstoffen des Kraftstoffs hergestellt werden muss. Dieses Verfahren führt in den fetten Betriebsphasen zu einer hohen thermischen Belastung der Brennkraftmaschine und des Partikelfilters sowie zu einem Anstieg des Kraftstoffverbrauchs.

Ein Partikelfilter, der auf der Eintrittsoberfläche einen Oxidationskatalysator und auf der Austrittsoberfläche mit einer SCR-aktiven Beschichtung versehen ist, ist aus der WO 01/12320 bekannt. Auch hier kann stromauf des Filters kein Ammoniak zugegeben werden, da es an den Oxidationskatalysatoren oxidiert werden würde und somit an den SCR-Katalysatoren nicht mehr zur Verfügung steht. Zudem sind die Katalysatoren nur in Bereichen des Filters angebracht, die gasundurchlässig sind und die somit nicht zur Partikelabscheidung beitragen. Dies hat zur Folge, dass der Partikelfilter relativ groß ausgelegt werden muss.

Das Problem aller zuvor beschriebenen Anordnungen ist, dass die geometrischen Oberflächen des Partikelfilters im Vergleich zu den, üblicher Weise eingesetzten Katalysatorsubstraten deutlich niedriger liegen. Der Grund hierfür ist, dass die Partikelfilter relativ große freie Querschnitte und damit freies Volumen auf der Rohgasseite benötigen, um Ruß- und Motorölasche einzulagern.

Weiter ist aus der DE 10 2004 0014 17 A1 ein Partikelfilter bekannt, der aus einem Mantel und wenigstens einem Körper besteht, der mindestens eine metallische Faserlage umfasst, wobei diese metallische Faserlage so angeordnet ist, dass eine Vielzahl räumlich getrennter Strömungswege durch den Körper gebildet sind, die jeweils zumindest an einer Stelle einen Strömungsbehinderer aufweisen. Die metallische Faserlage soll eine flächen bezogene Wärmekapazität im Bereich von 400 bis 1200 Joule pro Kelvin und m² aufweisen. Damit soll eine besonders große Partikelspeicherfähigkeit und Regenerationsfähigkeit des Partikelfilters bewirkt werden.

Die EP 20 766 A1 beschreibt eine Anordnung zur Reinigung der Abgase eines Dieselmotors die einen hitzebeständigen Filter enthält, der an der Eingangsseite einer katalytischen Schicht angeordnet ist um die Partikel aus dem schwarzer Rauch im Abgas, mit Hilfe des Filterung der Filter vollständig zu entfernen und dadurch die negativen Auswirkungen der Partikel, die auf der katalytischen Schicht anhaften würden zu verhindert. Die hitzebeständigen Filter kann leicht durch die Verbrennung und Beseitigung der zurückgehaltenen Rauchpartikel gereinigt werden. Weitere beschreibt die EP 20 766 A1 einen hitzebeständigen Filter mit einer katalytischen Schicht, ausgebildet in hohlzylindrischer laminierten Form. Ein Brenner ist vorgesehen um heißes Gas in den Filter zu dessen Reinigung Einzubringen. Der hitzebeständigen Filter und die katalytische Schicht sind in einem Gehäuse in kompakter Weise angeordnet.

Die EP 1 087 113 A1 betrifft eine Vorrichtung zur Abgasreinigung von Brennkraftmaschinen mit einem Abgaskatalysator und einer Partikelfiltereinrichtung zum Filtern von Feststoffen aus dem Abgas, wobei die Vorrichtung als integrierte Baueinheit ausgeführt ist, die im durch die Baueinheit geführten Abgasstrom den Abgaskatalysator und die Partikelfiltereinrichtung aufweist. Zweckmäßigerweise enthält die

Partikelfiltereinrichtung eine ringförmige Filterstruktur, die zwischen einem perforierten Außenrohr und einem perforierten Innenrohr angeordnet ist, wobei die beiden Rohrstirnseiten abgedeckt sind und in einer Öffnung der einen Rohrstirnseite der Abgaskatalysator angeordnet ist, durch den das zugeführte Abgas in einen Innenhohlraum des Innenrohres einströmt und von dort im wesentlichen radial durch das perforierte Innenrohr, die Filterstruktur und das perforierte Außenrohr abströmt.

Die Anordnung nach der US 2006/0179825 A1 betrifft ein System und Verfahren, wobei ein Partikelfilter mindestens etwa 40 Gew.% eines NOx adsorbierenden Materials enthält. Der Filter kann sowohl als NOx- und Partikel-Falle verwendet werden. Mit dem Bau der Filterelemente mit einer entsprechenden Menge an NOx adsorbierenden Materials, kann eine große Menge von NOx im Partikelfilter gespeichert werden, dies reduziert wesentlich das Volumen und die Kosten einer Auspuffantage, die sowohl eine katalytische Diesel-Partikelfilter und einem NOx-Falle beinhaltet um eine großen Menge von NOx aufzunehmen. In einer bevorzugten Ausführungsform oxidiert der Filter auch NO zu NO2. In einer weiteren bevorzugten Ausführungsform ist ein SCR-Katalysator hinter dem Filterelemente positioniert.

In der EP 1 878 885 A1 wird ein Verfahren für die Vergrößerung eines Temperaturbereiches beschrieben das die Verbrennung von Kohlenwasserstoffen hoher Konzentration ermöglicht, für eine rasche Versorgung eines nachgeordneten Katalysators mit Hochtemperatur-Gas. Der die Temperatur erhöhenden Katalysator ist im Abgaskanal der Brennkraftmaschine, vor einem Reinigung Katalysator für das Abgas angeordnet, wobei der die Temperatur erhöhende Katalysator katalytisch aktiven Komponenten auf einem feuerfesten dreidimensionale Struktur trägt und wobei die Konzentration dieser Komponenten ein Gefälle hat, derart, dass die Konzentration von der Zuflussseite zur Abströmseite geringer wird.

Die DE 10 2006 003 253 A1 schließlich beschreibt eine Filtereinrichtung, insbesondere für ein Abgassystem einer Brennkraftmaschine, mit einer offenporigen Filterstruktur zur Ablagerung von Rußpartikeln, wobei die Filterstruktur mindestens zwei verschiedene Bereiche aufweist, wobei in einem ersten Bereich der Filterstruktur ein erstes Katalysatormaterial angeordnet ist und wobei in einem zweiten Bereich der Filterstruktur ein zweites Katalysatormaterial angeordnet ist, wobei sich das erste und das zweite Katalysatormaterial hinsichtlich ihrer Zusammensetzung voneinander unterscheiden und/oder hinsichtlich der Menge mindestens einer katalytisch wirkenden Komponente.

Ausgehend vom vorstehend beschriebenen Stand der Technik ist es Aufgabe der vorliegenden Erfindung, eine Vorrichtung zur Reinigung eines Abgasstroms einer Brennkraftmaschine eines Kraftfahrzeuges, insbesondere eines Nutzfahrzeuges, zur Verfügung zu stellen, mittels dem sowohl eine Partikelals auch eine Stickoxidreduzierung, insbesondere bei mit Luftüberschuss betriebenen Brennkraftmaschinen, auf einfache und funktionssichere Weise sowie mit geringem Bauraum möglich wird.

Diese Aufgabe wird gelöst mit den Merkmalen des Anspruchs 1.

Gemäß Anspruch 1 weist die Vorrichtung zur Reinigung eines Abgasstroms einer Brennkraftmaschine einen, eine Einströmseite und eine Abströmseite aufweisenden Partikelabscheider auf, der in vorgegebenen Abscheiderbereichen eine katalytisch aktive Oberfläche zur Reduzierung von Stickoxiden aufweist. Erfindungsgemäß weist der Partikelabscheider einen Abgaspartikel, insbesondere Rußpartikel, definierter Größenordnung ein- und/oder anlagernden, einströmseitigen Abscheiderbereich auf, der wiederum einen abströmseitigen Abscheiderbereich wenigstens bereichsweise, vorzugsweise vollständig, ringförmig umgibt und/oder in seinem Innenhohlraum aufnimmt, wobei die katalytisch aktive Oberfläche zur Reduzierung von Stickoxiden am bzw. im abströmseitigen Abscheiderbereich und damit im Wesentlichen räumlich getrennt vom einströmseitigen Abscheiderbereich vorgesehen ist.

Mit dieser erfindungsgemäßen Lösung wird ein insgesamt kompakter Aufbau eines Abscheiders bzw. einer Vorrichtung zur Abgasreinigung zur Verfügung gestellt, ohne die Partikelspeicherkapazität, insbesondere die Ruß- bzw. Aschespeicherkapazität des einströmseitigen Abscheiderbereiches dadurch zu verkleinern, dass dort eine katalytisch aktive Oberfläche zur Reduzierung von Stickoxiden ausgebildet wird. Insbesondere in Verbindung mit solchen katalytisch aktiven Oberflächen zur Reduzierung von Stickoxiden, die durch die bei der exothermen Rußoxidation auftretenden hohen Temperaturen gegebenenfalls beschädigt werden können, wird ein weiterer besonderer Vorteil der erfindungsgemäßen Lösung sichtbar:

Denn in diesem Fall wirkt der einströmseitige Abscheiderbereich, der zum Beispiel durch einen Partikelfilter ausgebildet ist, was nachfolgend noch näher erläutert wird, als Isolierung und schützt dadurch die hitzeempfindlichen Katalysatoren im abströmseitigen Abscheiderbereich vor einer thermischen Schädigung. Dies ist insbesondere in Verbindung mit SCR-Katalysatoren als katalytisch aktiver Oberfläche zur Reduzierung von Stickoxiden von Vorteil, und hier speziell bei V₂O₅-haltigen Katalysatoren, da V₂O₅ bei hohen Temperaturen umkristallisiert oder gar sublimiert.

Zusammenfassend besteht der erfindungsgemäße Vorteil somit einerseits in der minimierten Baugröße und dem minimierten Platzbedarf beim Einbau einer derartigen Vorrichtung bzw. eines derartigen Partikelabscheiders in ein Fahrzeug; andererseits wird durch die Ausbildung bzw. Anordnung der katalytisch aktiven Oberfläche im oder am abströmseitigen Abscheiderbereich der Abstand zwischen dem einströmseitigen Partikelfilter und damit der dort stattfindenden exothermen Oxidation ausreichend groß gehalten.

Bevorzugt weist der einströmseitige Abscheiderbereich gemäß einer konkreten Ausgestaltung in Radialrichtung gesehen eine ringförmige, gasdurchlässige Trennwand auf, die die Einströmseite von der Abströmseite trennt. Eine derartige Trennwand ist insbesondere dann von Vorteil, wenn der einströmseitige Abscheiderbereich wenigstens eine einen Partikelfilter, insbesondere einen Tiefenfilter, ausbildende Faserlage aufweist, da die Trennwand dann gleichzeitig zur Fixierung der Faserlage im Partikelabscheider dienen kann.

Besonders bevorzugt ist die Trennwand dabei wenigstes bereichsweise doppelwandig mit einer inneren Trennwand und einer beabstandet davon angeordneten äußeren Trennwand ausgebildet, zwischen denen die Faserlage aufgenommen ist.

Die Trennwand selbst ist bevorzugt durch ein perforiertes Rohr und/oder eine perforierte Folie, insbesondere eine perforierte Metallfolie, und/oder ein schlauchförmiges Gestrick oder Gewirk, zum Beispiel aus einem Metallmaterial gebildet.

Die Faserlage selbst ist bevorzugt aus Keramik- und/oder Quarz- und/oder Silikatfasern ausgebildet. Die Faserlage wirkt dabei insbesondere als Tiefenfilter, das heißt, dass die Partikel im Inneren des Filters und nicht auf dessen Oberfläche abgeschieden werden. Dies hat zur Folge, dass die Abscheiderwirkung weit weniger stark mit der Beladung des Filters schwankt.

Gemäß einer besonders bevorzugten weiteren erfindungsgemäßen Ausgestaltung ist vorgesehen, dass der einströmseitige Abscheiderbereich einen sacklochartigen, einseitig offenen Innenhohlraum aufweist, in dem der abströmseitige Abscheiderbereich im wesentlichen formschlüssig aufgenommen ist. Der abströmseitige Abscheiderbereich kann dabei fest mit dem einströmseitigen Abscheiderbereich, insbesondere mit einer Trennwand derselben, verbunden sein oder aber auch austauschbar im Innenhohlraum aufgenommen sein.

Mit einer derartigen, die kompakte Bauweise und Anordnung begünstigenden konkreten Ausgestaltung wird insbesondere ein Abscheider geschaffen, bei dem der Rohabgasstrom über einen Seitenwandbereich in den einströmseitigen Abscheiderbereich und damit in den Partikelabscheider einströmt. Über ein in Strömungsrichtung des Abgasstroms gesehen hinteres Stirnseitenende strömt der Abgasstrom dann aus dem abströmseitigen Abscheiderbereich und damit aus dem Partikelabscheider aus. Mit einem derartigen konkreten Aufbau wird somit eine definierte und einfach beherrschbare Durchströmung des Partikelabscheiders trotz kompakter Bauweise erzielt.

Besonders vorteilhaft ist vorgesehen, dass der abströmseitige Abscheiderbereich eine größere geometrische Oberfläche aufweist als der einstromseitige Abscheiderbereich. Konkret kann dabei die geometrische Oberfläche des abströmseitigen Abscheiderbereichs wenigstens um 20 %, bevorzugt wenigstens um 30 % größer ausgebildet sein als die geometrische Oberfläche des einstromseitigen Abscheiderbereichs. Mit einer derartig wesentlich größeren geometrischen Oberfläche wird eine effektive Stickoxidreduzierung erzielt, da wesentlich mehr Katalysatormaterial auf der Abströmseite vorgesehen werden kann. Um diese große geometrische Oberfläche im abströmseitigen Abscheiderbereich auszubilden, kann der abströmseitige Abscheiderbereich im einfachsten Falle durch ein Geflecht und/oder Gewirk und/oder Gestrick aus einem vorgegebenen Material, insbesondere aus einem Metallund/oder Keramik - und/oder Glasmaterial, gebildet sein. Eine alternative Möglichkeit hierzu sieht vor, den abströmseitigen Abscheiderbereich durch ein eine Vielzahl von Strömungskanälen ausbildendes Folienpaket auszubilden. Diese Strömungskanäle sind dabei untereinander bevorzugt durch Perforationen oder dergleichen strömungsverbunden. Als Folienmaterial eignet sich auch hierwiederum ein Metall, aber auch Keramik und/oder Glas, insbesondere letztere als Gestrick. Insbesondere in Verbindung mit einem derartigen Folienpaket kann gemäß einer konkreten Ausgestaltung vorgesehen sein, dieses Folienpaket durch wenigstens eine gewellte, spiral- oder S-förmig zusammengerollte, in vorgegebenen Bereichen Überströmöffnungen zwischen den wabenförmigen Strömungskanälen aufweisende Folie auszubilden. Um ein Ineinanderrutschen der Folien zu vermeiden, können zwischen den gewellten Folien auch glatte Folien vorgesehen werden. Eine weitere Möglichkeit besteht darin, das Substrat als statischen Mischer auszubilden, indem die Kanäle nicht parallel, sondern versetzt zueinander ausgeführt sind, wobei auf eine Glattlage verzichtet werden kann. Das Folienpaket kann auch durch mehrere gewellte, plattenförmige Folien ausgebildet sein.

Mit derartigen Einbauten zur Ausbildung des abströmseitigen Abscheiderbereichs wird eine erhebliche Vergrößerung der geometrischen Oberfläche bei nach wie vor kompaktem Bauvolumen erzielt, so dass bei einer zum Beispiel katalytischen Beschichtung dieser den abströmseitigen Abscheiderbereich bildenden Einbauten die erwünschte Menge an katalytisch aktiver Oberfläche zu Stickoxidreduzierung auf engstem Bauraum ausgebildet werden kann.

Als Bauteile und Materialen zur Ausbildung der abströmseitigen Abscheiderbereiche eignen sich dabei konkret insbesondere Metallfolien und/oder Sintermetallplatten und/oder Streckmetallfolien. Diese können durch geeignetes Umformen die gewünschte größere Oberfläche auf der Abströmseite bereitstellen, ohne dass separate zusätzliche Bauteile und Einbauten notwendig sind. Werden dennoch derartige separate Einbauten zur Vergrößerung der Oberfläche, beispielsweise Spiralen, Abstandshalter, Stege oder dergleichen verwendet, lassen sie sich durch einfaches Löten, Schweißen oder durch formschlüssige Verbindungen an den metallischen Folien oder Platten fixieren.

Besonders vorteilhaft ist es, wenn die Beladung, speziell bei SCR-aktivem Katalysatormaterial auf der Abströmseite des Partikelabscheiders in Strömungsrichtung des Abgases gesehen zunimmt. Erreicht werden kann die entsprechende Verteilung des zum Beispiel SCR-aktiven Materials dadurch, dass der abströmseitige Abscheiderbereich in Schichten aufgebaut ist, wobei diese Schichten eine in Strömungsrichtung des Abgases ansteigende Beladung mit dem zum Beispiel SCR-aktiven Material aufweisen. Es ist natürlich auch möglich, die Beladung mit dem zum Beispiel SCR-aktiven Material durch Beschichten oder Imprägnieren der Abströmseite des Partikelabscheiders so vorzunehmen, dass der Grad der Beladung mit steigender Eindringtiefe der Beschichtungs- oder Imprägnierlösung abnimmt. Das SCR-aktive Katalysatormaterial, mit dem der Partikelabscheider im abströmseitigen Abscheiderbereich beladen ist, kann als Aktivkomponenten bevorzugt Vanadium und/oder V₂O₅ und/oder WO₃/TiO₂ und/oder eisenhaltige Zeolithe und/oder kupferhaltige Zeolithe und/oder kobalthaltige Zeolithe enthalten. Das Gleiche gilt selbstverständlich im übertragenen Sinne auch für NOₓ-Speicher-und/oder Drei-Wege-Katalysatoren, die die abströmseitige katalytisch aktive Oberfläche zur Reduzierung von Stickoxiden ausbilden.

In Verbindung mit einem NOₓ-Speicherkatalysator werden bevorzugt Platin und/oder Palladium und/oder Rhodium und/oder Barium und/oder Kalzium als Aktivkomponenten vorgesehen, während im Falle eines Drei-Wege-Katalysators als Aktivkomponenten bevorzugt Platin und/oder Palladium und/oder Rhodium vorgesehen werden.

Um insbesondere in Verbindung mit einem SCR-Katalysator und damit einer stromauf des Partikelabscheiders erfolgenden Reduktionsmittelzudosierung eine ausreichende Bereitstellung von Ammoniak (NH₃) sicherzustellen, kann der einströmseitige Abscheiderbereich gemäß einer weiteren bevorzugten Ausgestaltung mittels eines entsprechenden Katalysatormaterials beschichtet sein, imprägniert sein oder ein derartiges aktives Katalysatormaterial aufweisen. Als Aktivkomponente für ein solches Katalysatormaterial kommen TiO₂ und/oder TiO₂/SiO₂ und/oder TiO₂/SiO₂/Al₂O₃ und/oder Zeolithe in Frage.

Um insbesondere in diesem Zusammenhang zu vermeiden, dass bei der SCR-Reaktion eventuell unverbrauchtes Ammoniak in die Umwelt gelangt, ist es weiter von Vorteil, den Partikelabscheider abströmseitig, das heißt im abströmseitigen Abscheiderbereich in Strömungsrichtung des Abgas gesehen endseitig, bevorzugt im Anschluss an eine Beladung bzw. Beschichtung desselben mit einem SCR-aktiven Katalysatormaterial, mit einem Katalysatormaterial zu versehen, insbesondere zu beschichten oder zu imprägnieren, welches das im Abgas vorhandene überschüssige Ammoniak oxidieren kann. Ein hierfür geeignetes Katalysatormaterial zur Oxidation von überschüssigem Ammoniak kann als Aktivkomponente Elemente der Platingruppe und/oder deren Oxide und/oder Zeolithe enthalten.

Gemäß einer weiteren besonders bevorzugten Ausgestaltung der erfindungsgemäßen Vorrichtung ist vorgesehen, stromauf des Partikelabscheiders, in Verbindung mit der Durchführung der selektiven katalytischen Reduktion (SCR), und weiter stromauf zur Zudosierstelle eines Reduktionsmittels in dem Abgasstrang, einen Oxidationskatalysator anzuordnen, der zumindest ein Teil des im Abgasstrom enthaltenen Stickstoffmonoxids in Stickstoffdioxid überführt. Durch diese Maßnahme wird eine kontinuierliche Oxidation der im einströmseitigen Abscheiderbereich ein- bzw. angelagerten Rußpartikel nach den folgenden Gleichungen

2 NO₂ +C -> 2 NO + CO₂

2 NO₂ + C -> 2 NO + CO

2 C + 2 NO₂ -> N₂ + 2 CO₂

möglich, wobei das Temperaturniveau niedriger ist, als bei einer zyklischen Regeneration eines Partikelfilters durch zum Beispiel Anfetten des Verbrennungsgemisches oder durch Zugabe von Kohlenwasserstoffen in das heiße Abgas. Als Aktivmaterial für einen derartigen Oxidationskatalysator zur Überführung von Stickstoffmonoxid in Stickstoffdioxid eignen sich insbesondere Platin und/oder Platinoxid und/oder Zeolithe.

Insbesondere in Verbindung mit der Verwendung eines derartigen Oxidationskatalysators wird der Vorteil der erfindungsgemäßen Lösung nochmals besonders deutlich:
Durch die größere aktive Oberfläche auf der Abströmseite und damit auf der Reinseite des Partikelabscheiders kann der Schwerpunkt der NOₓ-Reduktion auf diese Seite und damit weg von der Rußoxidation durch NO₂ gelegt werden.
Würde der Schwerpunkt dagegen auf der Einströmseite bzw. Rohgasseite liegen, wie dies bei den Standardpartikelfiltern gemäß dem Stand der Technik der Fall ist, wenn diese komplett mit einem NOₓ-Speicherkatalysator oder einer SCR-aktiven Beschichtung versehen ist, würde dies gemäß nachstehender Gleichung

   NO + 2 NH₃ + NO₂ -> 2 N₂ + 3 H₂

   zu einer starken Absenkung der NO₂-Konzentration auf der Einströmseite führen, wodurch die Oxidation des dort abgeschiedenen Rußes und damit die Filterregeneration mit Hilfe des NO₂ erheblich verschlechtert würde.

Die erfindungsgemäße Lösung bietet somit die Möglichkeit, den einströmseitigen und den abströmseitigen Abscheiderbereich mit unterschiedlichen Katalysatoren und/oder unterschiedlichen Katalysatorbeladungen zu versehen.
Da die Temperaturen einströmseitig durch die Rußoxidation höher liegen als auf der Abströmseite, ist es zudem sinnvoll, den einströmseitigen Abscheiderbereich mit einem thermisch stabileren Katalysator zu versehen als den abströmseitigen Abscheiderbereich.

In diesem Zusammenhang ist auch zu beachten, dass die Menge des aufgebrachten Katalysators grundsätzlich so gering gehalten werden sollte, dass der Abgasgegendruck auf einem bestimmten Niveau gehalten werden kann. Typischerweise sollte daher die aufgebrachte Katalysatormasse weniger als 50 % der Masse der Abscheiderwände betragen. Der Anteil der Masse kann allerdings erhöht werden, wenn die Porosität des Washcoats auf über 30 % angehoben wird.

Die Erfindung wird nachfolgend anhand einer Zeichnung näher erläutert. Der Schwerpunkt der zeichnerischen Darstellung liegt dabei auf SCR-Systemen zur selektiven katalytischen Reduktion, da diese die verfahrenstechnisch anspruchsvolleren Systeme darstellen. Allerdings kann die erfindungsgemäße Lösung, wie bereits oben beschrieben, grundsätzlich bei allen Katalysatoren zur NOₓ-Reduktion verwendet werden.

### Es zeigen:

- Fig. 1: eine schematische Prinzipdarstellung einer erfindungsgemäßen Abgasreinigungsvorrichtung,
- Fig. 2: ein Längsquerschnitt durch eine erste Ausführungsform einer erfindungsgemäßen Abgasreinigungsvorrichtung,
- Fig. 3: schematisch ein Längsschnitt entlang der Linie A-A der Fig. 2,
- Fig. 4: schematisch ein Längsquerschnitt durch eine zweite Ausführungsform einer erfindungsgemäßen Abgasreinigungsvorrichtung, und
- Fig. 5: schematisch ein Längsquerschnitt durch eine dritte Ausführungsform einer erfindungsgemäßen Abgasreinigungsvorrichtung.

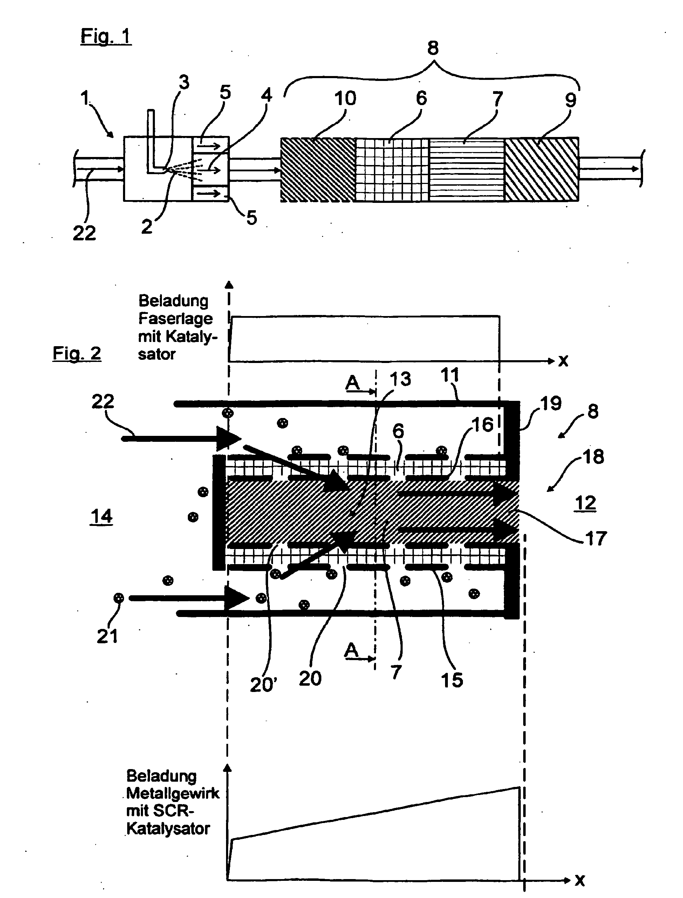

In der Fig. 1 ist schematisch eine Prinzipdarstellung der erfindungsgemäßen Vorrichtung 1 zu Erläuterung deren Funktionsweise gezeigt. Die von der nicht dargestellten Brennkraftmaschine durch die Verbrennungsvorgänge erzeugten Abgase gelangen zunächst in einen Abgasaufbereitungstrakt, in welchem dem heißen Abgas ein Reduktionsmittel 2 möglichst motornah mittels einer Düse 3 als Zudosiervorrichtung beigemischt wird. Bei dem Reduktionsmittel 2 handelt es sich, wie bei Kraft- bzw. Nutzfahrzeugen mit SCR-Katalysatoren in der Praxis üblich, bevorzugt um eine wässrige Harnstofflösung, wobei jedoch auch die Zugabe von Harnstoff in fester Form denkbar ist. Grundsätzlich ist es auch möglich, als Reduktionsmittel Ammoniak zuzugeben, der an anderer Stelle, zum Beispiel unter günstigen thermischen Bedingungen, aus einem Ammoniak abgespaltenen Stoff gewonnen wird.

Die Zudosierung des Reduktionsmittels 2 erfolgt in Abhängigkeit von vorgegebenen Betriebsparametern der Brennkraftmaschine gesteuert über eine ebenfalls nicht dargestellte Motorsteuereinheit und zwar dergestalt, dass über die Düse 3 die wässrige Harnstofflösung als Reduktionsmittel 2 in einen Abgasteilstrom 4 eingesprüht wird. Beispielhaft ist hier parallel zum Abgasteilstrom 4 ein Oxidationskatalysator 5 angeordnet, dessen Aufgabe darin besteht, nach der nachstehenden Gleichung

2 NO + O₂ <-> 2 NO ₂

einen Teil des im Abgas enthaltenen Stickstoffmonoxides mittels des im Abgas vorhandenen überschüssigen Sauerstoffes zu Stickstoffdioxid aufzuoxidieren. Das so erzeugte Stickstoffdioxid kann einerseits bei der Reduktion der Feststoffpartikel und andererseits bei der nachgeordneten SCR-Reaktion verwendet werden, wie dies nachfolgend noch näher beschrieben wird.

Stromab des Abgasteilstroms und des parallel zu diesem angeordneten Oxidationskatalysators 5 ist ein Partikelfilter 5 angeordnet, der die im Abgas befindlichen Rußpartikel an- bzw. einlagert. Die so im Partikelfilter 6 festgehaltenen Rußpartikel werden durch das stromauf mit Hilfe des Oxidationskatalysators 5 erzeugte Stickstoffdioxid zu Kohlenmonoxid, Kohlendioxid, Stickstoff und Stickstoffmonoxid kontinuierlich umgesetzt, so dass aufwendige Regenerationszyklen für den Partikelfilter 6 entfallen können.

Die eigentliche selektive katalytische Reduktion (SCR-Verfahren) der Stickoxide erfolgt durch einen SCR-Katalysator 7, der in der Fig. 1 der Einfachheit halber als separates Bauteil eingezeichnet ist, aber gemäß der erfindungsgemäßen Lehre, wie weiter unten noch beschrieben, als SCR-aktive Beschichtung eines sowohl den Partikelfilter 6 als auch den SCR-Katalysator 7 umfassenden Partikelabscheiders 8 ausgeführt ist.

In der angesprochenen Reduktionsreaktion soll ein möglichst großer Anteil der im Abgas vorhandenen Stickoxide, bei gleichzeitiger hoher Selektivität der Reduktion, in Stickstoff und Wasserdampf überführt werden, ohne dass überschüssiger Ammoniak im Abgasstrom verbleibt. Bei der angesprochenen SCR-Reduktionsreaktion ist das eventuell noch im Abgasstrom vorhandene restliche Stickstoffdioxid reaktionsfreudiger als das restliche im Abgas enthaltene Stickstoffmonoxid. Es ist daher wünschenswert, den Oxidationskatalysator 5 so auszulegen, dass ein möglichst hoher Anteil an Stickstoffmonoxid in Stickstoffdioxid überführt wird, das heißt nach Möglichkeit mehr als zur Umsetzung der Rußpartikel im Partikelfilter 6 des Partikelabscheiders 8 nötig ist.

In Anbetracht der ständig wechselnden Betriebsbedingungen einer in einem Kraftfahrzeug betriebenen Brennkraftmaschine kann die gewünschte möglichst hohe Umsetzungsrate an Stickoxiden nur dann sicher gelingen, wenn ein geringfügiger Ammoniaküberschuss in Kauf genommen wird. Um im Falle ungenügender Umsetzung zu verhindern, dass giftiges Ammoniak mit dem teilgereinigten Abgas an die Außenluft bzw. Umgebungsluft abgegeben wird, ist dem SCR-Katalysator 7 ein NH₃-Oxidationskatalysator 9 nachgeordnet, mit dem das überschüssige Ammoniak in Stickstoff und Wasserdampf überführt werden kann. Der NH₃-Oxidationskatalysator 9 ist ebenfalls, wie weiter unten noch näher erläutert, Bestandteil des erfindungsgemäßen Partikelabscheiders 8 und in der Fig. 1 lediglich zur Erläuterung der Funktionsweise als separates Bauteil dargestellt. Die Oxidationsreaktion zur Beseitigung des überschüssigen Ammoniaks sollte möglichst selektiv ablaufen, so dass zumindest Anteile von Iridium oder Iridiumoxid als Aktivmaterial für den NH₃-Oxidationskatalysator 9 verwendet werden sollten.

Wie in Fig. 1 weiter gestrichelt eingezeichnet, kann zur Verbesserung der Abspaltung des Ammoniaks aus dem Reduktionsmittel ein Hydrolysekatalysator 10 zum Einsatz kommen, wenn zum Beispiel das Temperaturniveau an der Zuführstelle für das Reduktionsmittel nicht hoch genug ist. Dieser Hydrolysekatalysator 10, der im Abgasstrom stromab der Zuführstelle des Reduktionsmittels 2 und stromauf des Partikelfilters 6 angeordnet ist, ist ebenfalls integraler Bestandteil des Partikelabscheiders 8, wie nachfolgend noch näher erläutert wird.

Eine erste Ausführungsform eines erfindungsgemäßen Aufbaus des Partikelabscheiders 8 mit SCR-Aktivität ist nunmehr in der Fig. 2 dargestellt. Diese Fig. 2 zeigt schematisch den Partikelabscheider 8, der hier beispielhaft in ein Schalldämpfergehäuse 11 integriert ist.

Der Partikelabscheider weist einen zu einer Abströmseite 12 hin offenen, sacklochartigen Innenhohlraum 13 auf, der zu einer Einströmseite 14 hin entsprechend geschlossen ausgebildet ist. Der Partikelfilter 6 ist hier durch eine Faserschicht bzw. Faserlage aus Keramik- und/oder Gals- und/oder Quarz- und/oder Silikatfasern gebildet, die zwischen einem Außenrohr 15 und einem Innenrohr 16 im Wesentlichen formschlüssig aufgenommen ist. Das Innenrohr 16 bildet dabei die Trennwand zwischen dem einströmseitigen und durch den Partikelfilter 6 gebildeten Abscheiderbereich und einem abströmseitigen Abscheiderbereich, der hier durch ein in den Innenhohlraum 13 formschlüssig eingebrachtes Metallgewirk 17 ausgebildet ist. Der Partikelfilter 6 ist zur Abströmseite 12 hin mit einer eine abströmseitige Öffnung 18 freigebenden Stirnwand 19 verschlossen, die hier beispielhaft in das Schalldämpfergehäuse 11 übergeht.

Wie dies dem unterhalb der Fig. 2 angeordneten Diagramm zu entnehmen ist, welches die Beladung des Metallgewirks 17 mit einem SCR-Katalysatormaterial in Strömungsrichtung des Abgases x zeigt, nimmt diese Beladung des Metallgewirks 17 mit SCR-Katalysatormaterial in Strömungsrichtung x des Abgases gesehen zu, das heißt steigt hier beispielhaft stetig an. Dadurch wird sichergestellt, dass der SCR-Katalysator vor allem mehr zur Abströmseite 12 hin angeordnet ist, um hohe NOx- Umsätze auch dann sicherzustellen, wenn große Abgasmengen über die näher am Austritt liegenden Öffnungen in den Trennwänden in das Metallgestrick einströmen und somit nur einen kurzen Wege innerhalb des Metallgestricks zurücklegen. Zudem ist im Normalbetrieb die Eintrittsseite 14 "heißer" als die Austrittsseite, so dass sich dort höhere NOx-Umsätze ergeben, was eine Rücknahme der Beladung ermöglicht.

Sowohl das Außenrohr 15 als auch das Innenrohr 16 weisen zum Beispiel durch Perforationen gebildete Öffnungen 20, 20' auf, durch die der mit Rußpartikeln 21 und mit Ammoniak als Reduktionsmittel (nicht dargestellt) beladene Abgasstrom 22 im seitlichen Wandbereich des Partikelabscheiders 8 zuerst durch den Partikelfilter 6 strömt und dort die Rußpartikel 21, insbesondere im faserhaltigen Tiefenfilter ein- bzw. anlagert, bevor das so von Rußpartikeln 21 gereinigte Abgas durch die innenrohrseitigen Öffnungen 20' in den Innenhohlraum 13 und damit in den abströmseitigen Abscheiderbereich, der durch das Metallgewirk 17 gebildet wird, einströmt. Dabei durchströmt das mit NH₃ beladene Abgas das mit dem SCR-aktiven Katalysatormaterial beladene Metallgewirk 17, bis es über die abströmseitige Abströmöffnung 18 aus dem Partikelabscheider 8 ausströmt. Auf dem Weg durch das mit SCR-aktivem Katalysatormaterial beladene Metallgewirk 17 findet die selektive katalytische Reduktion nach den folgenden Gleichungen statt

4 NO + 4 NH₃ + O₂ -> 4N₂ + 6 H₂O

2 NO + O₂ <-> 2 NO₂

wodurch die Stickoxide in Stickstoff und Wasserdampf überführt werden und somit ein von Rußpartikeln und Stickoxiden gereinigtes Abgas den Partikelabscheider verlässt.

Zur Regenerierung des Partikelfilters 6 müssen die im Filtermaterial angelagerten bzw. eingelagerten kohlenstoffhaltigen Rußpartikel 21 entweder kontinuierlich oder zyklisch entfernt werden. Die kontinuierliche Entfernung der Rußpartikel wird, wie bereits in Verbindung mit der Fig. 1 beschrieben, dadurch bewerkstelligt, dass den Partikelabscheider 8 bzw. damit auch den Partikelfilter 6 ein in der Fig. 2 nicht dargestellter Oxidationskatalysator 5 vorgeschaltet wird, der nach der folgenden Gleichung

2 NO + O₂ <-> 2 NO₂

zumindest einen Teil des im Abgas vorhandenen Stickstoffmonoxids in Stickstoffdioxid überführt. Der Oxidationskatalysator 5 muss auch stromauf zu der Stelle liegen, an der das Reduktionsmittel dem Abgasstrom beigegeben wird, da sonst das Reduktionsmittel oxidiert und damit für die SCR-Reaktion unbrauchbar würde.

Das im Abgas angereicherte Stickstoffdioxid bewirkt im Kontakt mit den abgeschiedenen Rußpartikeln nach den folgenden Reaktionen

2 NO₂ + C -> 2 NO + CO₂

2 NO₂ + C -> 2 NO + CO

2 C + 2 NO₂ -> N₂ + 2 CO₂

im Temperaturbereich ab 200°C eine Umsetzung der Rußpartikel 21 zu CO, CO₂, N₂ und NO, wobei diese Reaktionen kontinuierlich ablaufen, sodass der Filterkuchen auf einer im Wesentlichen konstanten Dicke und der durch diesen verursachte Abgasgegendruck auf einen im Wesentlichen konstanten Niveau gehalten werden kann.

Alternativ zu der kontinuierlichen Regenerierung des Partikelfilters 6 besteht auch die Möglichkeit, diesen aktiv zyklisch zu regenerieren. Dazu wird der Gehalt an Kohlenwasserstoffen im Abgas erhöht, und diese stromauf der Reduktionsmittelzuführung, meist mit Hilfe eines Oxidationskatalysators, der hier ebenfalls nicht dargestellt ist, oxidiert. Durch die Exothermie dieser Oxidation kommt es zu einem Temperaturanstieg im Abgas, der ab 550°C zu einer Oxidation der abgeschiedenen Rußpartikel 21 mit Hilfe von Sauerstoff führt.

Die in beiden Fällen der Regeneration des Partikelfilters gegebene lokale Temperaturerhöhung an der Anströmseite des Partikelfilters 6 und damit des Partikelabscheiders 8 wird durch das Filtermaterial relativ gut von dem abströmseitig angeordneten Metallgewirk 17 abgeschirmt, sodass eine Schädigung des auf diesem angebrachten SCR-aktiven Katalysatormaterials nicht zu befürchten ist. Um bei kritischen Temperaturverhältnissen allerdings eine Schädigung des SCR-aktiven Katalysatormaterials sicher auszuschließen, können anstelle des temperaturempfindlicheren Vanadiums bzw. V₂O₅ auch VO₃/TiO₂ oder eisenhaltige und/oder kupferhaltige und/oder kobalthaltige Zeolithe als Katalysatormaterial verwendet werden.

Wie bereits in Verbindung mit Fig. 1 ausgeführt, kann es zur Verbesserung der Abspaltung von Ammoniak aus dem Reduktionsmittel, zum Beispiel einer wässrigen Harnstofflösung (AdBlue), notwendig sein, einen die Abspaltung begünstigenden Katalysator einzusetzen, um die Bildung von Cyanursäure nach den folgenden Reaktionen zu verhindern

(NH₂)₂CO -> NH₃ + HNCO

HNCO + H₂O -> NH₃ + CO₂

3HNCO ^{<350°C □→}_{← >350°C} (HNCO)₃

mit (NH₂)₂CO = Harnstoff, HNCO = Isocyansäure, (HNCO)₃ = Cyanursäure

Die Bildung von Cyanursäure ist deshalb problematisch, weil es dadurch zu einer Verblockung des Partikelfilters 6 und damit nicht nur zum Ausfall des Abgasnachbehandlungssystems, sondern sogar der gesamten Brennkraftmaschine kommen kann. Deshalb wird der Partikelfilter 6 einströmseitig mit einem die Abspaltung begünstigenden Katalysatormaterial beladen, wie dies in dem oberhalb des Partikelabscheiders 8 dargestellten Diagramm schematisch gezeigt ist. Die Beladung kann hier über die gesamte Erstreckungslänge des Partikelfilters 6 in Abströmungsrichtung x des Abgases gesehen einen gleichen, konstanten Wert aufweisen. Selbstverständlich sind auch andere Beladungsvarianten möglich. Infrage kommende Katalysatormaterialien für eine derartige Beschichtung des Partikelfilters sind TiO₂ oder TiO₂/SiO₂ oder TiO₂/SiO₂/Al₂O₃ sowie Zeolithe.

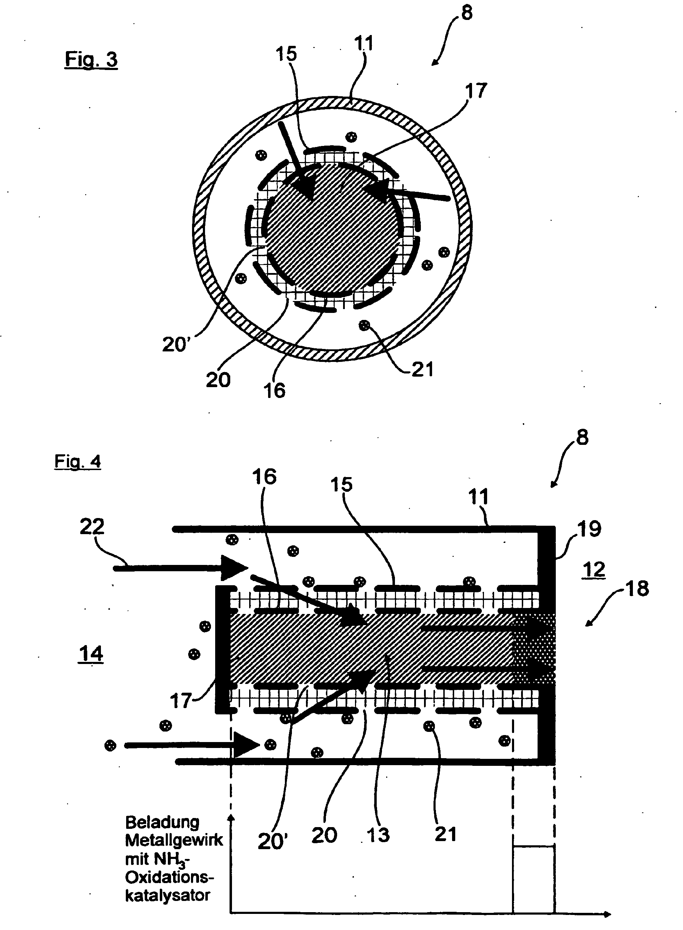

In Fig. 3 ist schließlich ein Querschnitt durch den Partikelabscheider 8 entlang der Linie A-A der Fig. 2 gezeigt.

Um im instationären Betrieb der Brennkraftmaschine, wie es bei in Fahrzeugen betriebenen Brennkraftmaschinen der Normalfall ist, einen möglichst hohen Umsatz an Stickoxiden beim SCR-Verfahren zu erhalten, ist es notwendig, das Abgasnachbehandlungssystem mit leichtem Ammoniaküberschuss zu betreiben. Da das giftige Ammoniak-Gas nicht an die Außenluft abgegeben werden darf, besteht die Notwendigkeit, am Ende des Strömungsweges durch den Partikelabscheider 8 einen NH₃-Oxidationskatalysator 5 vorzusehen. Eine solche Anordnung ist in der Fig. 4 im Bereich des Metallgewirks 17 dunkler schraffiert schematisch dargestellt. In Verbindung mit der Ausgestaltung nach Fig. 2 gleiche Teile sind hier mit gleichen Bezugszeichen bezeichnet.

Konkret ist hier zur Oxidation des überschüssigen Ammoniaks im Abgas vorgesehen, unmittelbar im Bereich vor der abströmseitigen Abströmöffnung 18 entweder eine Imprägnierung des SCR-aktiven Katalysatormaterials mit einem katalytisch aktiven Material zur Oxidation von Ammoniak vorzunehmen oder das SCR-aktive Katalysatormaterial mit einem katalytisch aktiven Material zur Oxidation von Ammoniak zu beschichten. In beiden Fällen wird das überschüssige Ammoniak zuverlässig in Stickstoff und Wasserdampf überführt. Die Beladung des Metallgewirks 17 mit dem NH₃-Oxidationskatalysator ist wiederum lediglich beispielhaft in dem unterhalb der Fig. 4 gezeigten Diagramm dargestellt.

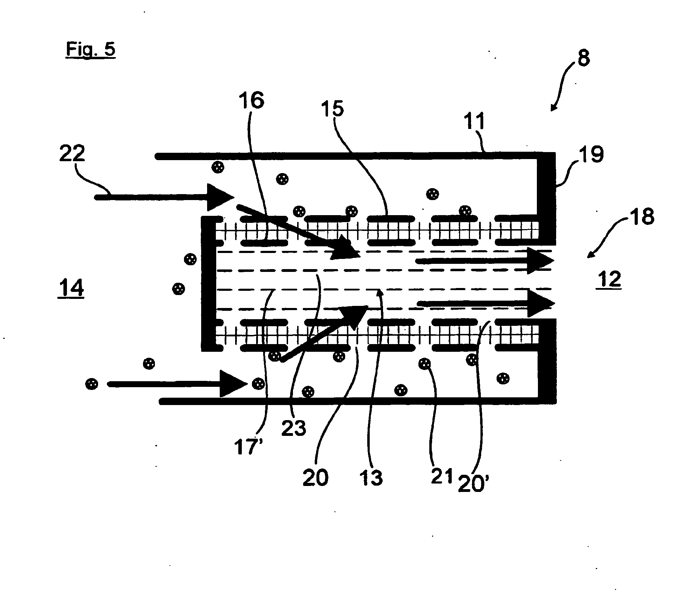

In der Fig. 5 ist schließlich eine dritte Ausführungsform eines erfindungsgemäßen Partikelabscheiders gezeigt. Zu den Ausgestaltungen nach den Fig. 2 und 4 gleiche Teile werden hier ebenfalls mit gleichen Bezugszeichen bezeichnet. Im Unterschied zu den beiden vorherigen Ausgestaltungen gemäß der Fig. 2 und 5 ist hier anstelle des Metallgewirks 17 ein perforiertes Katalysatorsubstrat 17' im Innenhohlraum 13 des Partikelabscheiders 8 angeordnet. Dieses perforierte Katalysatorsubstrat 17' wird durch Aufeinanderstapeln und/oder spiralförmiges Aufrollen von gewellten Metallfolien ausgebildet und bildet parallele Strömungskanäle 23 aus. Wie das Metallgewirk 17 wird auch das Katalysatorsubstrat 17' katalytisch beschichtet.

## Patentansprüche

1. Vorrichtung zur Reinigung eines Abgasstroms einer Brennkraftmaschine eines Kraftfahrzeuges, mit einem eine Einströmseite und eine Abströmseite aufweisenden Partikelabscheider, der in vorgegebenen Abscheiderbereichen eine katalytisch aktive Oberfläche (7) zur Reduzierung von Stickoxiden aufweist, **dadurch gekennzeichnet, dass** der Partikelabscheider (8) einen Abgaspartikel (21), definierter Größenordnung ein- und/oder anlagernden einströmseitigen Abscheiderbereich (6) aufweist, der einen abströmseitigen Abscheiderbereich (17, 17') wenigstens bereichsweise ringförmig umgibt und/oder in seinem Innenhohlraum (13) aufnimmt, wobei die katalytisch aktive Oberfläche (7) zur Reduzierung von Stickoxiden im abströmseitigen Abscheiderbereich (17, 17') vorgesehen ist und dass der einströmseitige Abscheiderbereich (6) in Radialrichtung gesehen eine ringförmige, wenigstens bereichsweise gasdurchlässige Trennwand (15, 16) aufweist, die den einströmseitigen Abscheiderbereich (6) von dem abströmseitigen Abscheiderbereich (17, 17') trennt.

2. Vorrichtung nach Anspruch 1, **dadurch gekennzeichnet, dass** der einströmseitige Abscheiderbereich wenigstens eine, einen Partikelfilter (6), insbesondere einen Tiefenfilter, ausbildende Faserlage aufweist.

3. Vorrichtung nach Anspruch 2, **dadurch gekennzeichnet, dass** die Trennwand (15, 16) die Faserlage trägt.

4. Vorrichtung nach einem der Ansprüche 2 bis 3, **dadurch gekennzeichnet, dass** die Trennwand wenigstens bereichsweise doppelwandig mit einer inneren Trennwand (16) und einer beabstandet davon angeordneten äußeren Trennwand (15) ausgebildet ist, zwischen denen der durch eine Faserlage gebildete Partikelfilter (6) aufgenommen ist.

5. Vorrichtung nach einem der Ansprüche 2 bis 4, **dadurch gekennzeichnet, dass** die Trennwand (15, 16) durch ein perforiertes Rohr und/oder eine perforierte Folie und/oder ein schlauchförmiges Gestrick oder Gewirk gebildet ist.

6. Vorrichtung nach Anspruch 4 und 5, **dadurch gekennzeichnet, dass** der einströmseitige Abscheiderbereich (6) so ausgelegt ist, dass der Rohabgasstrom (22) über die äußere Trennwand (15) zu der den Partikelfilter (6) ausbildenden Faserlage und von dort durch die innere Trennwand (16) in den abströmseitigen Abscheiderbereich (17, 17') einströmt.

7. Vorrichtung nach einem der Ansprüche 1 bis 6, **dadurch gekennzeichnet, dass** der Innenhohlraum (13) sacklochartigen, einseitig offen ist, in dem der abströmseitige Abscheiderbereich (17, 17') im Wesentlichen formschlüssig und/oder austauschbar aufgenommen ist.

8. Vorrichtung nach einem der Ansprüche 1 bis 7, **dadurch gekennzeichnet, dass** der Rohabgasstrom (22) über einen in Strömungsrichtung (x) des Abgasstroms gesehen Seitenwandbereich in den einströmseitigen Abscheiderbereich (6) und damit in den Partikelabscheider (8) einströmt und über ein in Strömungsrichtung (x) des Abgasstroms gesehen hinteres Stirnseitenende (19) aus dem abströmseitigen Abscheiderbereich (17, 17') und damit aus dem Partikelabscheider (8) ausströmt.

9. Vorrichtung nach einem der Ansprüche 1 bis 8, **dadurch gekennzeichnet, dass** der abströmseitige Abscheiderbereich (17, 17') eine größere geometrische Oberfläche aufweist als der einströmseitige Abscheiderbereich (6), wobei bevorzugt vorgesehen ist, dass die geometrische Oberfläche des abströmseitigen Abscheiderbereiches (17, 17') wenigstens um 20 %, bevorzugt wenigstens um 30 % größer ist als die geometrische Oberfläche des einströmseitigen Abscheiderbereiches (6).

10. Vorrichtung nach einem der Ansprüche 1 bis 9, **dadurch gekennzeichnet, dass** der abströmseitige Abscheiderbereich (17; 17') durch ein Geflecht und/oder Gewirk und/oder Gestrick aus einem vorgegebenen Material, oder durch ein eine Vielzahl von Strömungskanälen (23) ausbildendes Folienpaket aus Metall und/oder Keramik und/oder Glas gebildet ist, welches Folienpaket durch wenigstens eine gewellte, spiral- oder S-förmig zusammengerollte, in vorgegebenen Bereichen Überströmöffnungen zwischen den wabenförmigen Strömungskanälen aufweisende Folie, unter Zwischenschaltung wenigstens einer Glattfolie zwischen benachbarten Wellprofilfolienbereichen, ausgebildet sein kann.

11. Vorrichtung nach einem der vorhergehenden Ansprüche, **dadurch gekennzeichnet, dass** die Beladung des abströmseitigen Abscheiderbereiches (17, 17') mit dem Katalysatormaterial zur Reduzierung von NOₓ in Strömungsrichtung (x) des Abgases gesehen zunimmt.

12. Vorrichtung nach einem der vorhergehenden Ansprüche, **dadurch gekennzeichnet, dass** der einströmseitige Abscheiderbereich (6) wenigstens bereichsweise mit einem Katalysatormaterial beschichtet oder imprägniert ist, das die Abspaltung von Ammoniak aus einem entsprechend vorgegebenen Reduktionsmittel, insbesondere Harnstoff oder eine wässrige Harnstofflösung, im Falle einer NOₓ-Reduktion mittels der selektiven katalytischen Reduktion (SCR) begünstigt.

13. Vorrichtung nach einem der vorhergehenden Ansprüche, **dadurch gekennzeichnet, dass** der Partikelabscheider (8) im abströmseitigen Abscheiderbereich (17, 17') in Strömungsrichtung (x) des Abgases gesehen zusätzlich zu der oder im Anschluss an die katalytisch aktive Oberfläche (7) zur Reduzierung von Stickoxiden mit einem Katalysatormaterial beschichtet oder imprägniert ist, das im Abgas vorhandenen überschüssigen Ammoniak oxidiert.

14. Vorrichtung nach einem der vorhergehenden Ansprüche, **dadurch gekennzeichnet, dass** stromauf einer Zuführung eines Reduktionsmittels (2) für eine selektive katalytische Reduktion und damit stromauf des Partikelabscheiders (8) ein Oxidationskatalysator (5) angeordnet ist, der zumindest einen Teil des im Abgasstrom enthaltenen Stickstoffmonoxids in Stickstoffdioxid überführt.

## Claims

1. Device for the purification of an exhaust-gas flow of an internal combustion engine of a motor vehicle, having a particle separator which has an inflow side and an outflow side and which, in defined separator regions, has a catalytically active surface (7) for the reduction of nitrogen oxides, **characterized in that** the particle separator (8) has an inflow-side separator region (6) which stores exhaust-gas particles (21) of a defined size range therein and/or thereon, said inflow-side separator region (6) at least regionally surrounding, in ring-shaped fashion, and/or receiving, in its interior cavity (13), an outflow-side separator region (17, 17'), wherein the catalytically active surface (7) for the reduction of nitrogen oxides is provided in the outflow-side separator region (17, 17'), and **in that** the inflow-side separator region (6) has, as viewed in a radial direction, a ring-shaped, at least regionally gas-permeable partition (15, 16) which separates the inflow-side separator region (6) from the outflow-side separator region (17, 17').

2. Device according to Claim 1, **characterized in that** the inflow-side separator region has at least one fibrous layer which forms a particle filter (6), in particular a depth filter.

3. Device according to Claim 2, **characterized in that** the partition (15, 16) bears the fibrous layer.

4. Device according to either of Claims 2 and 3, **characterized in that** the partition is at least regionally of double-walled form with an inner partition (16) and, arranged spaced apart therefrom, an outer partition (15), between which partitions the particle filter (6), which is formed by a fibrous layer, is received.

5. Device according to one of Claims 2 to 4, **characterized in that** the partition (15, 16) is formed by a perforated tube and/or by a perforated foil and/or by a hose-shaped knitted fabric or knit.

6. Device according to Claims 4 and 5, **characterized in that** the inflow-side separator region (6) is designed such that the untreated exhaust-gas flow (22) flows via the outer partition (15) to the fibrous layer that forms the particle filter (6), and from there through the inner partition (16) into the outflow-side separator region (17, 17').

7. Device according to one of Claims 1 to 6, **characterized in that** the interior cavity (13) is formed in the manner of a blind hole and is open on one side, and the outflow-side separator region (17, 17') is received in substantially positively locking and/or exchangeable fashion in said interior cavity.

8. Device according to one of Claims 1 to 7, **characterized in that** the untreated exhaust-gas flow (22) flows into the inflow-side separator region (6), and thus into the particle separator (8), via a side wall region as viewed in the flow direction (x) of the exhaust-gas flow, and flows out of the outflow-side separator region (17, 17'), and thus out of the particle separator (8), via a rear face side end (19) as viewed in the flow direction (x) of the exhaust-gas flow.

9. Device according to one of Claims 1 to 8, **characterized in that** the outflow-side separator region (17, 17') has a larger geometrical surface area than the inflow-side separator region (6), wherein it is preferably provided that the geometric surface area of the outflow-side separator region (17, 17') is at least 20%, preferably at least 30% larger than the geometric surface area of the inflow-side separator region (6) .

10. Device according to one of Claims 1 to 9, **characterized in that** the outflow-side separator region (17; 17') is formed by a mesh and/or knit and/or knitted fabric composed of a defined material, or by a foil pack which forms a multiplicity of flow ducts (23) and which is composed of metal and/or ceramic and/or glass, which foil pack may be formed by at least one undulating foil which is rolled up in spiral or S-shaped form and which has flow transfer openings between the honeycomb-shaped flow ducts in defined regions, with at least one smooth foil being interposed between adjacent undulating profile foil regions.

11. Device according to one of the preceding claims, **characterized in that** the loading of the outflow-side separator region (17, 17') with the catalyst material for the reduction of NOₓ increases as viewed in the flow direction (x) of the exhaust gas.

12. Device according to one of the preceding claims, **characterized in that** the inflow-side separator region (6) is at least regionally coated or impregnated with a catalyst material which promotes the splitting of ammonia from a correspondingly defined reducing agent, in particular urea or an aqueous urea solution, in the event of a NOₓ reduction by selective catalytic reduction (SCR).

13. Device according to one of the preceding claims, **characterized in that**, in the outflow-side separator region (17, 17'), in addition or adjacent to the catalytically active surface (7) for the reduction of nitrogen oxides as viewed in the flow direction (x) of the exhaust gas, the particle separator (8) is coated or impregnated with a catalyst material which oxidizes the excess ammonia present in the exhaust gas.

14. Device according to one of the preceding claims, **characterized in that**, upstream of a means for the supply of a reducing agent (2) for a selective catalytic reduction, and thus upstream of the particle separator (8), there is arranged an oxidation catalyst (5) which converts at least some of the nitrogen monoxide contained in the exhaust-gas flow into nitrogen dioxide.

## Revendications

1. Ensemble d'épuration de l'écoulement de gaz d'échappement du moteur à combustion interne d'un véhicule automobile, l'ensemble présentant
un séparateur de particules qui présente un côté d'admission et un côté de sortie, avec dans des parties prédéterminées du séparateur une surface catalytiquement active (7) de réduction des oxydes d'azote,
**caractérisé en ce que**
le séparateur (8) de particules présente une partie (6) de séparateur située côté admission, qui reçoit et/ou conserve des particules (21) de gaz d'échappement d'un ordre de grandeur défini et qui entoure en anneau au moins certaines parties d'une partie (17, 17') du séparateur située en aval et/ou la reçoit dans sa cavité intérieure (13),
**en ce que** la surface catalytiquement active (7) de réduction des oxydes d'azote est prévue dans la partie (17, 17') du séparateur située en aval et
**en ce que** la partie (6) du séparateur située en amont présente dans la direction radiale une paroi annulaire de séparation (15, 16), dont au moins certaines parties sont perméables aux gaz et qui sépare la partie (6) du séparateur située en amont de la partie (17, 17') du séparateur située en aval.

2. Ensemble selon la revendication 1, **caractérisé en ce que** la partie du séparateur située en amont présente au moins une couche de fibres formant un filtre (6) à particules et en particulier un filtre profond.

3. Ensemble selon la revendication 2, **caractérisé en ce que** la paroi de séparation (15, 16) porte la couche de fibres.

4. Ensemble selon l'une des revendications 2 à 3, **caractérisé en ce que** la paroi de séparation est configurée au moins en partie à double paroi avec une paroi intérieure de séparation (16) et une paroi extérieure de séparation (15) située à distance de la première et entre lesquelles le filtre (6) à particules formé par une couche de fibres est repris.

5. Ensemble selon l'une des revendications 2 à 4, **caractérisé en ce que** la paroi de séparation (15, 16) est formée d'un tube perforé, d'un film perforé et/ou d'un tricot ou treillis en forme de manchon.

6. Ensemble selon les revendications 4 et 5, **caractérisé en ce que** la partie (6) du séparateur située en amont est conçue de telle sorte que l'écoulement (22) de gaz d'échappement brut s'avance par l'intermédiaire de la paroi de séparation externe (15) vers la couche de fibres formant le filtre (6) à particules et de là à travers la paroi intérieure de séparation (16) pour se rendre dans la partie (17, 17') du séparateur située en aval.

7. Ensemble selon l'une des revendications 1 à 6, **caractérisé en ce que** la cavité intérieure (13) ouverte d'un côté en forme de trou aveugle est reprise dans la partie (17, 17') du séparateur situé en aval, essentiellement en correspondance géométrique et/ou de manière remplaçable.

8. Ensemble selon l'une des revendications 1 à 7, **caractérisé en ce que** l'écoulement (22) de gaz d'échappement brut pénètre dans la partie (6) du séparateur située en amont par l'intermédiaire d'une partie de paroi située latéralement dans la direction d'écoulement (x) de l'écoulement de gaz d'échappement et ainsi dans le séparateur (8) de particules, et par l'intermédiaire d'une extrémité (19) frontale située en aval dans la direction d'écoulement (x) de l'écoulement de gaz d'échappement hors de la partie (17, 17') du séparateur située en aval et de là hors du séparateur (8) de particules.

9. Ensemble selon l'une des revendications 1 à 8, **caractérisé en ce que** la partie (17, 17') du séparateur située en aval présente une surface géométrique plus grande que la partie (6) du séparateur située en amont, et **en ce qu'**il est de préférence prévu que la surface géométrique de la partie (17, 17') du séparateur située en aval soit d'au moins 20 % et de préférence d'au moins 30 % plus grande que la surface géométrique de la partie (6) du séparateur située en amont.

10. Ensemble selon l'une des revendications 1 à 9, **caractérisé en ce que** la partie (17; 17') du séparateur située en aval est formée par un treillis, un tissu ou un tricot en matériau prédéterminé ou par un empilement de feuilles métalliques, céramiques et/ou en verre formant plusieurs canaux d'écoulement (23), le paquet de feuilles pouvant être formé par au moins une feuille ondulée, enroulée en spirale ou en S, présentant dans certaines parties entre les canaux d'écoulement en forme de nid d'abeilles des ouvertures de débordement entre lesquelles au moins une feuille lisse est intercalée entre les parties voisines de feuilles ondulées.

11. Ensemble selon l'une des revendications précédentes, **caractérisé en ce que** la charge de la partie (17, 17') du séparateur située en aval en matériau catalyseur de réduction des NOₓ augmente dans la direction d'écoulement (x) des gaz d'échappement.

12. Ensemble selon l'une des revendications précédentes, **caractérisé en ce que** la charge de la partie (6) du séparateur située en amont est revêtue ou imprimée au moins en partie par un matériau catalyseur qui favorise la dissociation de l'ammoniac à partir d'un agent réducteur prédéterminé approprié, en particulier l'urée ou une solution aqueuse d'urée, dans le cas d'une réduction des NOₓ au moyen d'une réduction catalytique sélective (SCR).

13. Ensemble selon l'une des revendications précédentes, **caractérisé en ce que** le séparateur (8) de particules est revêtu ou imprégné dans la partie (17, 17') du séparateur située en aval dans la direction d'écoulement (x) des gaz d'échappement, en plus de la surface (7) catalytiquement active de réduction des oxydes d'azote ou à la suite de celle-ci par un matériau catalyseur qui oxyde l'ammoniac en accès présent dans les gaz d'échappement.

14. Ensemble selon l'une des revendications précédentes, **caractérisé en ce qu'**un catalyseur d'oxydation (5) qui convertit au moins une partie du monoxyde d'azote que contient l'écoulement de gaz d'échappement en dioxyde d'azote est disposé en amont d'une amenée d'agent réducteur (2) permettant une réduction catalytique sélective, et donc en amont du séparateur (8) de particules.
